# EUROPÄISCHE PATENTSCHRIFT

(11) **EP 0 354 609 B1**
(45) Veröffentlichungstag und Bekanntmachung des Hinweises auf die Patenterteilung: **01.12.1993**
(21) Anmeldenummer: 89201934.0
(22) Anmeldetag: 22.07.1989
(51) Int. Cl.: C01F 11/46

(54) **Verfahren zur Herstellung von ultrafeinem Bariumsulfat**
Process for the preparation of ultra-fine barium sulfate
Procédé de production de sulfate de baryum ultrafin

(30) Priorität: 29.07.1988 DE 3825774
(43) Veröffentlichungstag der Anmeldung: 14.02.1990
(73) Patentinhaber: METALLGESELLSCHAFT AKTIENGESELLSCHAFT, 60015 Frankfurt (DE)
(72) Erfinder: Röhrborn, Hans-Joachim, Dr., D-4133 Neukirchen-Vluyn (DE)

(56) Entgegenhaltungen:
- DE-A- 2 246 818
- DE-A- 3 703 377
- FR-A- 763 207
- PATENT ABSTRACTS OF JAPAN, Band 6, Nr. 244 (C-138)[1122], 2. Dezember 1982; & JP-A-57 145 031 (ONAHAMA SAKAI KAGAKU K.K.) 07-09-1982
- CHEMICAL ABSTRACTS, Band 89, Nr. 8, 21. August 1978, Seite 122, Zusammenfassung Nr. 61843m, Columbus, Ohio, US; E.V. POLYAKOV et al.: "Study of the drying of barium sulfate in a jet-spray dryer", & KHIM. PROM-ST. (MOSCOW) 1978, (4), 297-8

## Beschreibung

Die Erfindung betrifft ein Verfahren zur Herstellung von ultrafeinem Bariumsulfat gemäß Oberbegriff des Patentanspruchs.

Bariumsulfat dient in vielfältiger Weise als weißer, chemisch inerter Füllstoff und ist in großen Mengen verfügbar. Er wird entweder als gemahlener Schwerspat oder als gefälltes Produkt verwendet. Der Anwendungszweck bestimmt letztlich die Wahl des Produktes.

Sowohl als Mahlspat als auch als Fällprodukt wird Bariumsulfat, je nach Anwendungszweck, in einem breiten Spektrum in unterschiedlichsten Primärteilchengrößen hergestellt und eingesetzt. Handelsübliche Produkte erreichen beispielsweise eine Feinheit, ausgedrückt in nach der BET-Methode bestimmten spezifischen Oberfläche, von ca. 25 m²/g. Für bestimmte Anwendungsgebiete ist jedoch eine noch größere Oberfläche, wie sie z.B. bei gefällten und pyrogenen Kieselsäuren bekannt ist, wünschenswert.

Aus JP-PS 57/51 119 ist ein Verfahren zur Herstellung von ultrafeinem Bariumsulfat bekannt, worin eine wäßrige Suspension von Bariumsulfid und eine wäßrige Lösung von Schwefelsäure in einen Rührreaktor eingeleitet werden, und das gefällte Bariumsulfat abgetrennt, gewaschen und nach erneuter Suspendierung sprühgetrocknet wird. Bariumsulfid wird im Überschuß zugeführt.

Gemäß dem aus FR-PS 763 207 bekannten Verfahren zur Herstellung feinkörniger Fällungsprodukte werden eine wäßrige Lösung von Bariumchlorid und eine wäßrige Lösung von Natriumsulfat ineinandergestäubt und feinteiliges Bariumsulfat einer Korngröße kleiner als 0,2 µ erhalten. Das vorbekannte Bariumsulfat kann wegen seiner Feinheit in der technischen Praxis nur ungenügend ausgewaschen werden und ist daher durch Bariumchlorid und Natriumsulfat verunreinigt, was die anwendungstechnischen Eigenschaften des BaSO₄, wie Leitfähigkeit, Dispergierbarkeit, Transparenz, in unerwünschter und nachteiliger Weise beeinflußt.

Der Erfindung liegt die Aufgabe zugrunde, die Nachteile der bekannten und insbesondere vorgenannten Verfahren zu vermeiden und ein hochreines Bariumsulfat mit besonders großer spezifischer Oberfläche bereitzustellen.

Die Erfindung löst die Aufgabe ausgehend von einem Verfahren zur Herstellung von ultrafeinem Bariumsulfat durch Fällung von Bariumionen mit Schwefelsäure, wobei die anionische Komponente der Bariumausgangsverbindung mit der Schwefelsäure ein leicht verflüchtigbares Reaktionsprodukt liefert und die erhaltene BaSO₄-Suspension aufgearbeitet wird. Gemäß der Erfindung wird ein Verfahren der genannten Art in der Weise ausgestaltet, daß eine wäßrige Lösung von Schwefelsäure und eine wäßrige Lösung bzw. Suspension einer Bariumverbindung aus der Gruppe Bariumchlorid, -sulfid, -oxid, -hydroxid oder -carbonat in exakt stöchiometrischen Mengenverhältnissen getrennt und gleichzeitig einer Zerstäubereinrichtung zugeführt und zur Reaktion gebracht werden und das erhaltene Fällungsmedium ohne mechanische Abtrennung des ausgefällten Bariumsulfats direkt, oder ggf. nach vorheriger Eindickung einer Sprühtrocknung zugeführt wird.

Für das Verfahren gemäß der Erfindung ist es wesentlich, daß
a) die wäßrigen Lösungen bzw. Suspensionen der Reaktionskomponenten in exakt stöchiometrischen Mengenverhältnissen aufeinander treffen, ferner daß
b) eine feinste Zerteilung der Lösungen bzw. Suspensionen herbeigeführt wird, und daß
c) nur solche Reaktionskomponenten gewählt werden, bei deren Umsetzung außer dem gewünschten Hauptprodukt BaSO₄ nur leichtverflüchtigbare Nebenprodukte entstehen wie H₂O, H₂S, HCl oder CO₂.

Bei Einhaltung dieser kritischen Bedingungen wird sowohl der übliche Überschuß einer Fällungskomponente zwecks Vollständigkeit der Fällung erübrigt, als auch wird eine mechanische Abtrennung des ausgefällten BaSO₄ aus dem Fällungsmedium wie auch Auswaschung erübrigt. Die nach dem Verfahren der Erfindung hergestellten Produkte aus gefälltem Bariumsulfat haben je nach Fahrweise, das heißt je nach Konzentration der Reaktionslösungen, der Fälltemperatur und der Fällgeschwindigkeit eine spezifische Oberfläche (BET) zwischen 25 und 65 m²/g. Die Kornfeinheit läßt sich bei Verwendung von 3-Stoffdüsen durch Variation des Treibgasdrucks und bei der Verwendung von Zerstäuberscheiben durch Variation der Umdrehungsgeschwindigkeit der Zerstäuberscheibe beeinflussen. Höhere Zerstäubungsdrucke und höhere Zerstäubungsdrehzahl führen im allgemeinen zu feineren Produkten. Die Produkte zeichnen sich durch extrem niedrigen Salzgehalt, Agglomeratfreiheit und ausgezeichnete Dispergierbarkeit aus. Die Art des eventuellen Salzgehaltes ist abhängig von der Art der Bariumkomponenten. Für die Menge des Salzgehaltes ist die elektrolytische Leitfähigkeit ein indirektes Maß für den Elektrolyt- bzw. Salzgehalt. Die Leitfähigkeit liegt bei weniger als 30 µS. Handelsübliche BaSO₄-Produkte haben eine Leitfähigkeit von mehr als 150 µS. Aufgrund der großen Feinheit der Teilchen wird ferner in z.B. thermoplastischen Polymeren eine hohe Transparenz bei hohem Füllgrad erzielt.

Die Ausgangskomponente kann ein in Wasser leicht lösliches Bariumsalz sein, wie Bariumchlorid, oder ein weniger lösliches Bariumsalz wie Bariumhydroxid, oder nur in Säuren lösliche Bariumsalze, wie Sulfid, Oxid oder Carbonat. Bariumhydroxid wird im Verfahren der Erfindung bevorzugt. Bei Verwendung von Bariumhydroxid entsteht als Reaktionsnebenprodukt lediglich Wasser bzw. Wasserdampf. Hingegen entstehen bei Einsatz von Bariumsulfid oder Bariumchlorid die zu entsorgenden Reaktionsnebenprodukte Schwefelwasserstoff bzw. Chlorwasserstoff. Die Bariumsalze werden im allgemeinen in Form einer 5 bis 50%igen wäßrigen Lösung oder Suspension eingesetzt. Vorzugsweise beträgt die Konzentration 10 bis 20 %.

Die Schwefelsäure wird als 5 bis 50%ige, vorzugsweise 10 bis 20%ige wäßrige Schwefelsäure eingesetzt.

Zur Durchführung des erfindungsgemäßen Verfahrens werden die wäßrigen Lösungen bzw. Suspensionen des Bariumsalzes bzw. die wäßrige Schwefelsäure in exakt stöchimetrischem Mengenverhältnis, z.B. gemäß der Reaktionsgleichung:

Ba(OH)₂ + H₂SO₄ → BaSO₄ + 2 H₂O

in getrennten Strömen mittels Dosierpumpen der Zerstäubungseinrichtung zugeführt und die beiden getrennten Ströme ineinander verdüst bzw. zerstäubt. Für die Zerstäubung eignen sich an sich bekannte Vorrichtungen, beispielsweise eine Mehrstoffdüse, wie Dreistoffdüse, oder Zentrifugalzerstäuber wie Sprühscheibe. Es ist besonders vorteilhaft, wenn sich die Zerstäubungseinrichtung im Kopfteil eines Tockenturms befindet. Bei dieser Ausführungsform des Verfahrens der Erfindung erfolgt die Zerstäubung der Teilströme direkt in den im Gleich- oder Gegenstrom geführten Heißgasstrom von 200 bis 500°C. Hierbei erfolgen Zerstäubung, Fällung und Trocknung quasi in einem Schritt, so daß das gefällte und getrocknete Bariumsulfat als besonders feinteiliges und oberflächenreiches Teilchen anfällt und je nach Fällbedingungen eine Oberfläche (BET) von mehr als 30 m²/g aufweist. Als Nebenprodukt der Reaktion entsteht lediglich Wasser.

Nach einer weiteren Ausgestaltung des erfindungsgemäßen Verfahrens können Fällung und Trocknung des Bariumsulfats auch in getrennten Schritten vorgenommen werden. Hierzu werden mittels Dosierpumpen in einem Reaktor exakt stöchiometrische Mengenströme von z.B. einer wäßrigen Lösung von Ba(OH)₂ und wäßrige H₂SO₄ einer Mehrstoffdüse oder einer Zerstäuberscheibe üblicher Bauart zugeführt und zur Reaktion gebracht. Hierbei fällt BaSO₄ aus und wird als Suspension mit einem pH-Wert von 7 ± 0,5 aufgefangen. Anschließend erfolgt eine Eindickung der Suspension mit Hilfe z.B. einer Dekanterzentrifuge und anschließend die Trocknung der eingedickten Suspension in z.B. einem Sprühtrockner.

Üblicherweise fällt die Fällsuspension des Bariumsulfats - ohne Trockenstufe - mit einem Feststoffgehalt von 10 bis 100 g BaSO₄/l an. Diese Suspension kann ohne Schwierigkeiten in einfacher Weise auf einen Feststoffgehalt von 150 bis 500 g BaSO₄/l gebracht werden. Diese Ausführungsform hat den Vorteil, daß durch den Schritt der Zwischeneindickung ein Teil des Wassers kostengünstig mechanisch abgetrennt werden kann und damit Trocknungskosten eingespart werden.

Die Vorteile der Erfindung sind darin zu sehen, daß in ebenso einfacher wie wirtschaftlicher Weise ein sehr reines, salzfreies Bariumsulfat von hoher Feinheit hergestellt wird, das nicht agglomeriert ist, leicht zu dispergieren ist und mit welchem Pigment ein hoher Füllgrad in thermoplastischen Polymeren erzielt wird.

Die Erfindung wird anhand der nachstehenden Beispiele näher und beispielhaft erläutert.

### Beispiel 1

Eine wäßrige Lösung von Bariumhydroxid (2,8 % Ba(OH)₂) und verdünnte Schwefelsäure (3,1 % H₂SO₄) wurden mittels Dosierpumpen getrennt der Zerstäubereinrichtung zugeführt und gemeinsam über eine 3-Stoffdüse in einem unbeheizten Sprühturm versprüht. Als Treibgas diente Stickstoff mit einem Druck von 6 bar. Die entstehende Fällsuspension mit 24 g/l Feststoff wurde gesammelt und in einem zweiten Verfahrensschritt in einem Sprühturm herkömmlicher Bauart im Gleichstrom getrocknet. Die Eintrittstemperatur betrug 325°C, die Abgastemperatur 120 bis 130°C.

Es wurde ein Bariumsulfat hergestellt mit einer spezifischen Oberfläche von 53 m²/g; die spezifische Leitfähigkeit betrug 37 µS.

### Beispiel 2

Wäßrige Bariumhydroxid-Lösung mit 15 % Ba(OH)₂ (von ca. 50°C, um ein Auskristallisieren von Bariumhydroxid zu vermeiden) und wäßrige Schwefelsäure mit 12 % H₂SO₄ wurden mittels Dosierpumpen getrennt der Zerstäubereinrichtung zugeführt und gemeinsam über eine 3-Stoffdüse im Kopfteil eines Sprühturms im Gleichstrom versprüht. Als Treibgas diente überhitzter Wasserdampf mit einem Druck von 3,3 bar. Das Produkt wurde simultan mit der Fällung im Sprühturm im Gleichstrom getrocknet mit einer Heißgaseintrittstemperatur von 325°C und einer Abgastemperatur von 120 bis 130°C.

Das ausgefällte BaSO₄ hatte eine spezifische Oberfläche von 51,5 m²/g.

### Beispiel 3

Wäßrige Bariumhydroxid-Lösung mit 19 % Ba(OH)₂ (von ca. 50°C) und verdünnte Schwefelsäure mit 25 % H₂SO₄ wurden mittels Dosierpumpen getrennt einer Zerstäuberscheibe im Kopfteil eines Sprühturms zugeführt und gemeinsam über eine Zerstäuberscheibe im Gleichstrom versprüht. Die Drehzahl der Zerstäuberscheibe betrug 22000 U/min. Die Trocknung erfolgte simultan mit der Fällung bei einer Heißgaseintrittstemperatur von 250°C und einer Abgastemperatur von 105°C.

Das hergestellte Bariumsulfat hatte eine spezifische Oberfläche von 14 m²/g. Bei Verwendung der gleichen Bariumhydroxid-Lösung führte die Verminderung der Schwefelsäurekonzentration auf 12 % H₂SO₄ unter sonst gleichen Bedingungen zu einem Produkt mit 23 m²/g.

In allen Beispielen wurde die Konzentration der Komponenten in den jeweiligen Lösungen so gewählt, daß gleichzeitig etwa gleiche Volumina mit den Dosierpumpen gefördert wurden und in der Zerstäubereinrichtung zusammentrafen.

## Patentansprüche

1. Verfahren zur Herstellung von ultrafeinem Bariumsulfat durch Fällung von Bariumionen mit Schwefelsäure, wobei die anionische Komponente der Bariumausgangsverbindung mit der Schwefelsäure ein leicht verflüchtigbares Reaktionsnebenprodukt liefert und die erhaltene BaSO₄-Suspension aufgearbeitet wird, dadurch gekennzeichnet, daß eine wäßrige Lösung von Schwefelsäure und eine wäßrige Lösung bzw. Suspension einer Bariumverbindung aus der Gruppe Bariumchlorid, -sulfid, -oxid, -hydroxid oder carbonat in exakt stöchiometrischen Mengenverhältnissen getrennt und gleichzeitig einer Zerstäubereinrichtung zugeführt und zur Reaktion gebracht werden und das erhaltene Fällungsmedium ohne mechanische Abtrennung des ausgefällten Bariumsulfats direkt, oder ggf. nach vorheriger Eindickung, einer Sprühtrocknung zugeführt wird.

2. Verfahren nach Anspruch 1, dadurch gekennzeichnet, daß eine 5 bis 50, vorzugsweise 10 bis 20-%ige wäßrige Lösung bzw. Suspension einer Bariumverbindung verwendet wird.

3. Verfahren nach den Ansprüchen 1 bis 2, dadurch gekennzeichnet, daß als Bariumverbindung Bariumhydroxid verwendet wird.

4. Verfahren nach den Ansprüchen 1 bis 3, dadurch gekennzeichnet, daß eine 5 bis 50, vorzugsweise 10 bis 20-%ige wäßrige Schwefelsäure verwendet wird.

5. Verfahren nach den Ansprüchen 1 bis 4, dadurch gekennzeichnet, daß eine Eindickung der Fällungssuspension von 10 bis 100 g/l auf einen BaSO₄-Gehalt von 150 bis 500 g/l vorgenommen wird.

6. Verfahren nach den Ansprüchen 1 bis 4, dadurch gekennzeichnet, daß die jeweiligen Ströme der wäßrigen Lösung bzw. Suspension eines Bariumsalzes und der wäßrigen Schwefelsäure der Zerstäubereinrichtung eines Sprühtrockners zugeführt werden und die Ströme der wäßrigen Medien unter gleichzeitiger Fällung und Trocknung des Bariumsulfats in einem im Gleich- oder Gegenstrom geführten und auf 200 bis 500°C erhitzten Gasstrom zerstäubt werden.

## Claims

1. A method for the production of ultra-fine barium sulphate by precipitation of barium ions with sulphuric acid, in which the anionic constituent of the barium starting compound with the sulphuric acid produces a readily volatilisable reaction byproduct and the resulting BaSO₄ suspension is worked up, characterized in that an aqueous solution or sulphuric acid and an aqueous solution or suspension of a barium compound from the group barium chloride, barium sulphide, barium oxide, barium hydroxide or barium carbonate is separated in exactly stoichiometric proportions and simultaneously are fed to an atomiser and are caused to react, and the resulting precipitation medium is sent directly, or optionally after prior thickening, to a spray-drying stage without mechanical separation of the precipitated barium sulphate.

2. A method according to Claim 1, characterized in that a 5 to 50%, preferably 10 to 20%, aqueous solution or suspension or a barium compound is used.

3. A method according to Claims 1 to 2, characterized in that barium hydroxide is used as the barium compound.

4. A method according to Claims 1 to 3, characterized in that a 5 to 50%, preferably 10 to 20%, aqueous sulphuric acid is used.

5. A method according to Claims 1 to 4, characterised in that thickening of the precipitation suspension from 10 to 100 g/l to a BaSO₄ content of 150 to 500 g/l is carried out.

6. A method according to claims 1 to 4, characterised in that the respective streams of the aqueous solution or suspension of a barium salt and of the aqueous sulphuric acid are fed to the atomiser of a spray-dryer and the streams of the aqueous media are atomised with simultaneous precipitation and drying of the barium sulphate in a gas stream which is guided in a co-current flow or counter-current flow and has been heated to 200 to 500°C.

## Revendications

1. Procédé de préparation de sulfate de baryum ultrafin, par précipitation d'ions baryum par de l'acide sulfurique, les constituants anioniques du composé de baryum de départ donnant avec l'acide sulfurique un sous-produit de réaction se volatilisant facilement et la suspension de BaSO₄ obtenue étant retraitée, caractérisé en ce qu'il consiste à envoyer indépendamment et simultanément en des rapports quantitatifs exactement stoechiométrique, à un dispositif d'atomisation, une solution aqueuse d'acide sulfurique et une solution aqueuse ou une suspension aqueuse d'un composé de baryum choisi parmi le chlorure de baryum, le sulfure de baryum, l'oxyde de baryum, l'hydroxyde de baryum ou le carbonate de baryum et à les faire réagir et à envoyer le milieu de précipitation obtenu, sans séparation mécanique du sulfate de baryum précipité, directement, ou le cas échéant, éventuellement après une concentration préalable, à un séchage par pulvérisation.

2. Procédé suivant la revendication 1, caractérisé en ce qu'il consiste à utiliser une solution aqueuse ou une suspension aqueuse d'un composé de baryum à 5 à 50 % et de préférence à 10 à 20 %.

3. Procédé suivant la revendication 1 ou 2, caractérisé en ce qu'il consiste à utiliser comme composé de baryum de l'hydroxyde de baryum.

4. Procédé suivant l'une des revendications 1 à 3, caractérisé en ce qu'il consiste à utiliser de l'acide sulfurique aqueux à 5 à 50 % et de préférence à 10 à 20 %.

5. Procédé suivant l'une des revendications 1 à 4, caractérisé en ce qu'il consiste à effectuer la concentration de la suspension de précipitation d'une teneur en BaSO₄ de 10 à 100 grammes par litre à une teneur de 150 à 500 grammes par litre.

6. Procédé suivant l'une des revendications 1 à 4, caractérisé en ce qu'il consiste à envoyer les courants de la solution ou de la suspension aqueuse d'un sel de baryum et de l'acide sulfurique aqueux au dispositif d'atomisation d'un sécheur par pulvérisation et à réduire en poudre les courants des milieux aqueux avec précipitation simultanée et séchage du sulfate de baryum dans un courant gazeux de même sens ou de sens opposé et porte entre 200 et 500 °C.
